# EUROPÄISCHE PATENTSCHRIFT

(11) **EP 2 406 157 B1**
(45) Veröffentlichungstag und Bekanntmachung des Hinweises auf die Patenterteilung: **01.05.2013**
(21) Anmeldenummer: 10706579.9
(22) Anmeldetag: 18.02.2010
(51) Int. Cl.: B65G 17/34

(54) **STÜCKGUTFÖRDERANLAGE MIT EINZELNEN BEHÄLTERN ZUM TRANSPORTIEREN VON STÜCKGÜTERN, INSBESONDERE VON GEPÄCKSTÜCKEN**
PIECE GOODS CONVEYANCE SYSTEM HAVING INDIVIDUAL CONTAINERS FOR TRANSPORTING PIECE GOODS, IN PARTICULAR LUGGAGE
INSTALLATION DE TRANSPORT D'ARTICLES INDIVIDUELS, COMPORTANT DES RÉCIPIENTS INDIVIDUELS POUR LE TRANSPORT D'ARTICLES, EN PARTICULIER DE COLIS

(30) Priorität: 12.03.2009 DE 102009012499
(43) Veröffentlichungstag der Anmeldung: 18.01.2012
(73) Patentinhaber: Siemens Aktiengesellschaft, 80333 München (DE)
(72) Erfinder: BACIC, Mato, 90453 Nürnberg-Krottenbach (DE)
(74) Vertreter: Wolff, Harry
(86) Internationale Anmeldenummer: PCT/EP2010/052050
(87) Internationale Veröffentlichungsnummer: WO 2010/102889

(56) Entgegenhaltungen:
- EP-A2- 0 306 144
- US-A- 4 781 281

## Beschreibung

Die Erfindung betrifft eine Stückgutförderanlage mit einzelnen Behältern zum Transportieren von Stückgütern, insbesondere von Gepäckstücken auf einer Förderbahn mit Trag- und Führungselementen für die Behälter und mindestens einer Endladestelle zum Entleeren des Stückgutes aus den Behältern und/oder mindestens einer Beladestelle zum Beladen jedes Behälters mit dem Stückgut, dessen Lagerfläche von einem jeden Behälter überspannenden tragfähigen endloses Tragband gebildet wird, das quer zur Transportrichtung des Behälters um beidseitig des Behälters angeordnete Umlenkwalze antreibbar geführt ist, wobei zum Antreiben des Tragbandes im Bereich der Be- und/oder Endladestelle ein stationärer Antrieb vorgesehen ist, der zumindest während des Be- und/oder Endladevorganges mit mindestens einem am Behälter vorgesehen Antriebselement für das Tragband koppelbar ist.

Um beliebige Stückgüter, insbesondere Gepäckstücke, wie Taschen und Koffer, aber auch Pakete, einzeln in einem in einem Behälter oder dergl. lagestabil mit hoher Geschwindigkeit über eine weit verzweigte Förderanlage mit vielen Richtungsänderungen zu transportieren und andererseits an vorbestimmten Positionen innerhalb der Förderanlage eine schnelle und kontrollierte Beladung bzw. Trennung von Stückgut und Behälter herbeizuführen, hat man verschiedenartig geformte Behälter verwendet. Insbesondere Behälter in Wannenform (Tray) sind so gestaltet, dass sie den den hohen Anforderungen best möglich genügen. Insbesondere die Berücksichtigung der unterschiedlichen Formen und Größen der zu transportierenden Stückgüter wirft mitunter Probleme auf; vor allem biegeschlaffe und rollfähige Gepäckstücke oder Stückgutteile verhalten sich sowohl beim Transport, wie auch beim Be- und Entladen kritisch.

Es ist bekannt, Förderanlagen zur Gepäckförderung verwendet, bei denen relativ einfache aus Kunststoff geformte Behälter auf einer Förderbahn mit Trag- und Führungselementen für den Behälter transportiert werden, die vorzugsweise aus zueinander parallelen endlos umlaufend angetriebenen Gurten bestehen, auf denen die Behälter passiv aufliegen. Nachteilig bei diesen Systemen sind die Be- und insbesondere Endladevorrichtungen, die erforderlich sind, um das Stückgut aus den zumeist sanft gemuldeten Schalen abzukippen. Dazu ist es unabdinglich, die Schwerkraft zu verwenden, was wiederum dazu führt, dass das Stückgut extrem beansprucht wird, wenn es seitlich aus der Förderanlage, z.B. über Rutschen ausgeschleust wird oder beim Beladen in die Behälter hinein geworfen wird.

Aus der Sortiertechnik sind die sogenannten Querbandförderer bekannt, die aus auf einer Förderanlage bewegbaren Fahrzeugen bestehen, von denen mehrere zu einem Zug oder zu einer endlos umlaufenden Fahrzeugkette zusammengefügt sind, wobei die einzelnen Fahrzeuge mit einem Tragband versehen sind, das quer zur Transportrichtung der Fahrzeuge umlaufend antreibbar ist. Auf diesem als Quergurt ausgeführten Tragband wird das Stückgut transportiert und an der gewünschten Endladestelle durch Antreiben des Tragbandes quer zur Transportrichtung seitlich ausgefördert. Diese Art Fördertechnik ist in Folge der Abhängigkeit der einzelnen Fahrzeuge von der verlegten Förderstrecke sehr beschränkt einsetzbar und z.B. in großen Flughafenanlagen mit großen Distanzen und unterschiedlichen Wegen nicht verwendbar. Zudem sind die einzelnen Wagen bekannter Anlagen gewöhnlich mit Antrieben versehen, die insgesamt den Aufwand einer solchen Anlage erhöhen.

Um Querbandförderer der bekannten Art für Fluggepäck anwendbar zu machen, ist bereits vorgeschlagen worden, den bekannten Behälter mit einem den Behälters tragfähig überspannenden endlosen Tragband als Lagerfläche für das Stückgut zu versehen, wobei das Tragband quer zur Transportrichtung des Behälters um beidseitig des Behälters angeordnete Umlenkwalzen antreibbar geführt ist. Die ansonsten passiven Behälter werden auf der oben beschriebenen Fördertechnik durch die Anlage transportiert und anlagenseitig gelenkt und gesteuert. Durch Antreiben des Tragbandes im Bereich der Be- und/oder Endladestation wird das Stückgut seitlich aus der Förderanlage ausgeschleust. Der Antrieb durch einen im Bereich der Be- und/oder Endladestelle vorgesehenen stationären Antrieb, der formschlüssig mit mindestens einem am Behälter vorgesehenen Antriebselement für das Tragband koppelbar ist. Das Antriebselement für das Tragband ist ein Schneckentrieb, der in der Be- und/oder Endladestation an einem parallel zur Transportrichtung endlos um Umlenkräder umlaufenden Zahnriemen angreift, dessen eines Umlenkrad über ein Winkelgetriebe mit einer der Umlenkwalzen des Tragbandes in Wirkverbindung steht. In diesen Zahnriemen greift formschlüssig ein parallel zu dem ersten Zahnriemen endlos umlaufend antreibbarer zweiter Zahnriemen einer stationären Antriebsstation ein.

Es hat sich gezeigt, dass die formschlüssige Kraftübertragung starkem Verschleiß unterliegt, weil die Eingriffe der Verzahnungen der Zahnriemen nicht präzise zu gewährleisten sind. Zudem entsteht eine hohe Geräuschimmission beim miteinander Kämmen der Zahnriemen infolge des spielbehafteten Zahneingriffs.

Aus der US 4,781,281 ist eine Stückgutförderanlage mit einem Behälter bekannt gemäß dem Oberbegriff des Anspruchs 1, der ein Tragband und ein für das Tragband vorgesehenes Antriebselement aufweist, welches mittels eines stationären Antriebs an einer Be- oder Entladestelle antreibbar ist.

Aufgabe der vorliegenden Erfindung ist es, ausgehend von dem bekannten Stand der Technik, die Stückgutförderanlage mit einem Behälter zum Transportieren und Sortieren von Gepäckstücken zu verbessern und einen verschleißarmen, einfachen und funktionellen Antrieb für die Behälter zu schaffen, der preisgünstig und wartungsarm den Transport und die Sortierung von Stückgüter, insbesondere Gepäckstücken in einer Gepäckförderanlage, übernimmt.

Zur Lösung der Aufgabe wird erfindungsgemäß vorgeschlagen, dass das am Behälter vorgesehene Antriebselement als parallel zur Transportrichtung endlos um Unlenkräder umlaufender Flachriemen ausgebildet ist, dessen mindestens eines Umlenkrad mit dem Tragband in Wirkverbindung steht und der im Bereich der Be- und/oder Endladestelle mit einem parallel zu dem ersten Riemen endlos umlaufend antreibbaren zweiten Flachriemen einer stationären Antriebsstation in Reibschluss bringbar ist, dessen Antriebsgeschwindigkeit und -richtung steuerbar sind.

Die Erfindung verzichtet auf den formschlüssigen Eingriff zweier miteinander kämmender Zahnriemen oder Ketten mit deren Nachteilen und schlägt eine rein reibschlüssige Verbindung zweier Flachriemen vor, von denen der eine angetrieben ist und den anderen, der an ersterem anliegt, über Reibschluss mitnimmt.

In einer besonders günstigen Ausgestaltung der Erfindung ist vorgesehen, dass der Flachriemen des am Behälter vorgesehenen Antriebselements und der Flachriemen der stationären Antriebstation um zueinander parallele horizontale Achsen umlaufen und die Ebene des Reibschlusses im Wesentlichen horizontal verläuft. Die Kraftübertragung von einem Flachriemen auf den anderen lässt sich leichter darstellen, wenn die Anpresskraft in vertikaler Richtung aufgebracht wird. In diesem Fall kann das Eigengewicht des Behälters als Anpresskraft bzw. Gegenkraft eingesetzt werden.

Nach einem weiteren Merkmal der Erfindung ist vorgesehen, dass der Flachriemen der Antriebsstation und der Flachriemen des Antriebselementes zumindest während des Be- und Entladevorgangs gegeneinander pressbar sind. Durch Aufbringen eines aktiven Anpressdrucks lässt sich der Mitnahmeeffekt der reibschlüssig gepaarten Flachriemen verbessern.

Vorzugsweise ist im Rahmen der Erfindung vorgesehen, dass der Flachriemen der Antriebsstation zumindest während des Be- und Entladevorgangs mittels einer Hubvorrichtung gegen den Flachriemen des Antriebselementes bewegbar ist. Die Hubvorrichtung kann erfindungsgemäß als Hubmagnet ausgebildet sein.

Um die Antriebskraft von dem Antriebselement an das Tragband für das Stückgut weiter zu leiten, ist nach einem besonderen Merkmal der Erfindung das den Behälter überspannende Tragband in Bereich seines Untertrums S-förmig um drei Antriebswalzen geführt ist, wobei die beiden äußeren Antriebswalzen das Tragband reib- oder formschlüssig seitlich gegen die gegenläufig bewegbare zentrale Antriebswalze pressen.
Das Einspannen des Tragbandes zwischen den Antriebswalzen stellt sicher, dass zwischen den Walzen und dem Tragband kein Schlupf entsteht und somit das Tragband so definiert steuerbar ist, dass aufliegendes Stückgut genau positioniert und zielgerecht abgeworfen bzw. ortsgenau übernommen werden kann.

Erfindungsgemäß ist die zentrale Antriebswalze zur Übertragung der Antriebskraft des Tragbandes getrieblich mit mindestens einem der Umlenkräder des Flachriemens des Antriebselementes verbunden. Nach einem bevorzugten Vorschlag der Erfindung ist die Antriebkraft für das Tragband über mindestens einen Transmissionsriemen übertragbar, der endlos über eine mit dem Umlenkrad des Antriebselementes koaxial verbundene Riemenscheibe und eine auf der zentralen Antriebswalze koaxial angeordnete Riemenscheibe, gegebenenfalls unter Umschlingung eines Umlenkrades, geführt ist. Auf diese Weise wird das Antriebsmoment der stationären Antriebsstation bei Bedarf reibschlüssig auf das Antriebselement übertragen, von dort über den Transmissionsriemen auf die zentrale Antriebswalze, die mit Hilfe der an ihr bzw. am Tragband anliegenden anderen beiden Antriebswalzen das Tragband des Behälters antreiben.

Da die Achsen der Riemenscheibe des Antriebselementes und der Riemenscheibe der Antriebswalze konstruktiv bedingt im rechten Winkel zueinander angeordnet sind, ist erfindungsgemäß der Transmissionsriemen um 90° in sich verdreht, so dass die erforderliche Umlenkung der Antriebskraft erfolgen kann.

Dadurch, dass das Tragband zwischen den Antriebswalzen S-förmig geführt und eingespannt ist, wird es ermöglicht, dass das Tragband zwischen den Umlenkwalzen muldenförmig nach unten durchhängt. Durch diese Maßnahme liegt das Stückgut auch in schnellen Kurvendurchfahrten sicher auf dem Tragband auf, ohne dass die Gefahr des ungewollten Abwerfens besteht.

Die Erfindung schafft einen sehr einfachen funktionellen Antrieb für einen Behälter zum Transportieren von Stückgütern, insbesondere von Gepäckstücken auf einer herkömmlichen Förderbahn mit bekannten Trag- und Führungselementen. Der Antrieb des Tragbandes ist einfach, preiswert und wartungsarm, teure mechanische Getriebe sind nicht erforderlich. Die einzelnen Bauteile sind leicht zu beschaffende Standardteile.

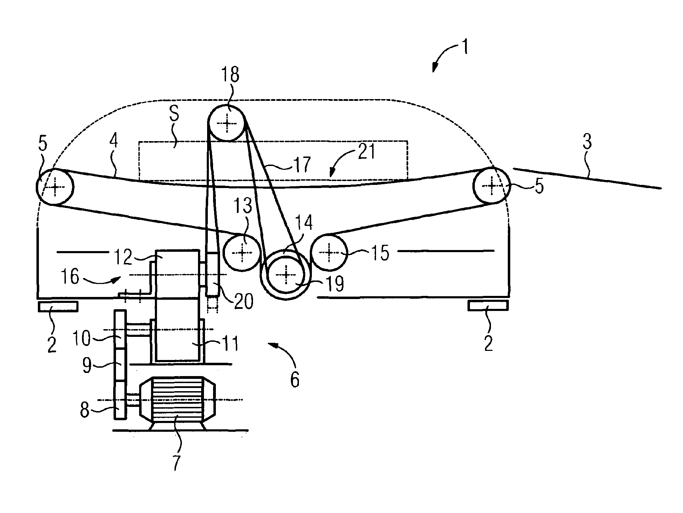

Ein Ausführungsbeispiel der Erfindung ist in der Zeichnung dargestellt und wird nachfolgend beschrieben.

In der stark vereinfachten Darstellung ist der Behälter insgesamt mit 1 bezeichnet, dessen Seitenwandkonturen gestrichelt dargestellt sind. Der Behälter ist zunächst in bekannter Weise aufgebaut und wird passiv auf einer angetriebenen Förderbahn mit Trag- und Führungselementen für den Behälter transportiert. Die Trag- und Führungselemente sind bei 2 angedeutet, sie bestehen aus gezahnten oder ungezahnten Flachriemen, auf denen der Behälter 1 lose aufliegt, während die Riemen endlos umlaufend (senkrecht zur Zeichnungsebene) angetrieben sind. Die Be- und Entladung des Behälters 1 erfolgt in Be- und Entladestationen entlang der Transportstrecke. An einer Entladestation kann das Stückgut beispielsweise über eine seitlich des Behälters vorgesehene Rutsche, die bei 3 angedeutet ist, ausgetragen werden.

Der Behälter 1 ist mit einem Tragband 4 für aufliegendes Stückgut S, beispielsweise ein Fluggepäckstück, versehen, welches um seitlich parallel zur Transportrichtung des Behälters angeordnete Umlenkwalzen 5 endlos geführt ist. Die Transportrichtung des Behälters 1 erfolgt senkrecht zur Zeichnungsebene. Zum Antrieb des Tragbandes 4 ist im Bereich der Be- und/oder Entladestelle ein stationärer Antrieb vorgesehen, der insgesamt mit 6 bezeichnet ist. Er besteht aus dem Elektromotor 7, auf dessen Motorwelle eine Riemenscheibe 8 koaxial befestigt ist. Über einen Riemen 9, vorzugsweise einen Zahnriemen, wird das Motormoment an eine Riemen- oder Zahnscheibe 10 weitergegeben, durch die das Umlenkrad eines sich parallel zur Transportrichtung erstreckenden Flachriemens 11 angetrieben wird. Der Flachriemen 11 hat eine Längserstreckung von der Länge des Behälters 1 und ist mit einer rutschhemmenden Oberfläche versehen.

Der Flachriemen 11 der stationären Antriebsstation 6 ist reibschlüssig mit einem am Behälter 1 angeordneten Antriebselement 16 gepaart, das hauptsächlich aus einem ebenfalls rutschhemmend ausgebildeten Flachriemen 12 besteht, der ebenfalls endlos um Umlenkräder geführt ist. Der Flachriemen 12 erstreckt sich ebenfalls parallel zur Transportrichtung des Behälters und ist derart angeordnet, dass die Oberfläche des Flachriemens 11 der Antriebsstation 6 an die Oberfläche des Flachriemens 12 des Antriebselementes 16 anpressbar ist. Dazu können (nicht dargestellte) Vorrichtungen an der Antriebsstation 6 vorgesehen sein, mit denen der Flachriemen 11 nach oben gegen den Flachriemen 12 des Antriebselementes gedrückt wird. Die Kraftübertragung über den Zahnriemen 9 erlaubt eine ausreichende Flexibilität für die erforderlichen Anpressbewegungen.

Um das Antriebsmoment vom Antriebselement 16 auf das Tragband 4 zu übertragen, ist das Tragband 4 im Bereich seines Untertrums s-förmig um Antriebswalzen 13, 14 und 15 geschlungen, wobei die Antriebswalzen 13 und 15 zwischen sich und der zentralen Antriebswalze 14 das Tragband 4 reibschlüssig greifen. Ein endlos ausgeführter Transmissionsriemen 17 umschlingt eine auf der zentralen Antriebswalze 14 stirnseitig koaxial angeordnete Riemenscheibe 19 und ist von dort über eine Umlenkrolle 18 zu der Riemenscheibe 20 geführt, die koaxial zu dem Umlenkrad des Flachriemens 12 angeordnet mit diesem umläuft. Da die Achsen des Umlenkrades des Flachriemens 12 und der zentralen Antriebswalze im rechten Winkel zueinander angeordnet sind, ist ein in sich Verdrehen des Transmissionsriemens 17 um 90° erforderlich, um das Antriebsmoment ohne Winkelgetriebe übertragen zu können.

Dadurch, dass das Tragband 4 quasi zwischen den Walzen 13, 14 und 15, um die es teilweise geschlungen ist, eingespannt ist, kann das Tragband 4 eine Muldung aufrecht erhalten, die auf der Oberseite des Tragbandes bei 21 angedeutet ist. Durch diese Muldung 21 wird sichergestellt, dass das Stückgut S beim Transport auch in Kurvenfahrten nicht seitlich herausfällt; dennoch ist aber eine leichte Austragung des Stückgutes S, beispielsweise über die Rutsche 3, in der Entladestation ebenso möglich, wie ein Beladen des Tragbandes in einer Beladestation. Durch Umkehr der Antriebsrichtung des Motors 7 ist beides möglich.

## Patentansprüche

1. Stückgutförderanlage mit einzelnen Behältern (1) zum Transportieren von Stückgütern (S), insbesondere von Gepäckstücken,auf einer Förderbahn mit Trag- und Führungselementen (2) für die Behälter (1) und mindestens einer Entladestelle zum Entleeren des Stückgutes (S) aus den Behältern (1) und/oder mindestens einer Beladestelle zum Beladen jedes Behälters (1) mit dem Stückgut (S), dessen Lagerfläche von einem jeden Behälter (1) überspannenden tragfähigen endlosen Tragband (4) gebildet wird, das quer zur Transportrichtung des Behälters (1) um beidseitig des Behälters (1) angeordnete Umlenkwalzen (5) antreibbar geführt ist, wobei zum Antreiben des Tragbandes (4) im Bereich der Be- und/oder Entladestelle ein stationärer Antrieb (6) vorgesehen ist, der zumindest während des Be- und/oder Entladevorganges mit mindestens einem am Behälter (1) vorgesehenen Antriebselement (16) für das Tragband (4) koppelbar ist,
**dadurch gekennzeichnet, dass**
das am Behälter (1) vorgesehene Antriebselement (16) als parallel zur Transportrichtung endlos um Umlenkräder umlaufender Flachriemen (12) ausgebildet ist, dessen mindestens eine Umlenkrad mit dem Tragband (4) in Wirkverbindung steht und der im Bereich der Be- und/oder Endladestelle mit einem parallel zu dem ersten Flachriemen (12) endlos umlaufend antreibbaren zweiten Flachriemen (11) einer stationären Antriebsstation (6) in Reibschluss bringbar ist, dessen Umlaufgeschwindigkeit und Umlaufrichtung steuerbar sind.

2. Stückgutförderanlage nach Anspruch 1,
**dadurch gekennzeichnet, dass**
der Flachriemen (12) des am Behälter (1) vorgesehenen Antriebselements (16) und der Flachriemen (11) der stationären Antriebstation (6) um zueinander parallele horizontale Achsen umlaufen und die Ebene des Reibschlusses im Wesentlichen horizontal verläuft.

3. Stückgutförderanlage nach Anspruch 1 und 2,
**dadurch gekennzeichnet, dass**
der Flachriemen (11) der stationären Antriebsstation (6) und der Flachriemen (12) des Antriebselementes (16) zumindest während des Be- und Entladevorgangs gegeneinander pressbar sind.

4. Stückgutförderanlage nach einem der Ansprüche 1 bis 3,
**dadurch gekennzeichnet, dass**
der Flachriemen (11) der stationären Antriebsstation (6) zumindest während des Be- und Entladevorgangs mittels einer Hubvorrichtung gegen den Flachriemen (12) des Antriebselementes (16) bewegbar ist.

5. Stückgutförderanlage nach Anspruch 4,
**dadurch gekennzeichnet, dass**
die Hubvorrichtung für den Flachriemen (11) der stationären Antriebsstation (6) als Hubmagnet ausgebildet ist.

6. Stückgutförderanlage nach einem der Ansprüche 1 bis 5,
**dadurch gekennzeichnet, dass**
das den Behälter (1) überspannende Tragband (4) im Bereich seines Untertrums S-förmig um drei Antriebswalzen (13, 14, 15) geführt ist, wobei die beiden äußeren Antriebswalzen (13 und 15) das Tragband (4) reib- oder formschlüssig seitlich gegen die gegenläufig bewegbare zentrale Antriebswalze (14) pressen.

7. Stückgutförderanlage nach Anspruch 6,
**dadurch gekennzeichnet, dass**
die zentrale Antriebswalze (14) des Tragbandes (4) getrieblich mit mindestens einem der Umlenkräder des Flachriemens (12) des Antriebselementes (16) zur Übertragung der Antriebskraft verbunden ist.

8. Stückgutförderanlage nach Anspruch 6 und 7,
**dadurch gekennzeichnet, dass**
die Antriebkraft für den Tragbandes (4) über mindestens einen Transmissionsriemen (17) übertragbar ist, der endlos über eine mit dem Umlenkrad des Antriebselementes (16) koaxial verbundene Riemenscheibe (20) und eine auf der zentralen Antriebswalze (14) koaxial angeordnete Riemenscheibe (19), gegebenenfalls unter Umschlingung eines Umlenkrades (18), geführt ist.

9. Stückgutförderanlage nach Anspruch 8,
**dadurch gekennzeichnet, dass**
der Transmissionsriemen (17) zwischen der Riemenscheibe (20) des Antriebselementes (16) und der Riemenscheibe (19) der Antriebswalze (14), deren Achsen im rechten Winkel zueinander angeordnet sind, um 90° in sich verdreht ist.

10. Stückgutförderanlage nach Anspruch 1 bis 9,
**dadurch gekennzeichnet, dass**
das Tragband (4) zwischen den Umlenkwalzen (5) muldenförmig (21) nach unten durchhängt.

## Claims

1. Piece goods conveyor installation having individual containers (1) for the transportation of piece goods (S), in particular of pieces of baggage, on a conveyer track with carrying and guiding elements (2) for the containers (1) and with at least one unloading station for emptying the piece goods (S) out of the containers (1) and/or at least one loading station for loading each container (1) with the piece goods (S), the bearing surface of which is formed by a load-bearing endless carrying belt (4) which spans each container (1) and which is drivably guided transversely with respect to the direction of transport of the container (1) around a deflecting roller (5) arranged on both sides of the container (1), there being provided in the region of the loading and/or unloading station, for the purpose of driving the carrying belt (4), a stationary drive (6) which, at least during the loading and/or unloading operation, can be coupled to at least one drive element (16), provided on the container (1), for the carrying belt (4), **characterized in that** the drive element (16) provided on the container (1) is designed as a flat belt (12) which rotates endlessly around deflecting wheels parallel to the direction of transport and at least one deflecting wheel of which is operatively connected to the carrying belt (4) and which, in the region of the loading and/or unloading station, can be brought into frictional connection with a second flat belt (11), endlessly drivable rotatably parallel to the first flat belt (12), of a stationary drive station (6), the rotational speed and direction of rotation of which second flat belt can be controlled.

2. Piece goods conveyor installation according to Claim 1, **characterized in that** the flat belt (12) of the drive element (16) provided on the container (1) and the flat belt (11) of the stationary drive station (6) rotate about horizontal axes parallel to one another, and the plane the frictional connection runs essentially horizontally.

3. Piece goods conveyor installation according to Claims 1 and 2, **characterized in that** the flat belt (11) of the stationary drive station (6) and the flat belt (12) of the drive element (16) can be pressed one against the other at least during the loading and unloading operation.

4. Piece goods conveyor installation according to one of Claims 1 to 3, **characterized in that** the flat belt (11) of the stationary drive station (6) can be moved toward the flat belt (12) of the drive element (16) by means of a lifting device during the loading and unloading operation.

5. Piece goods conveyor installation according to Claim 4, **characterized in that** the lifting device for the flat belt (11) of the stationary drive station (6) is designed as a lifting magnet.

6. Piece goods conveyor installation according to one of Claims 1 to 5, **characterized in that** the carrying belt (4) spanning the container (1) is guided in the region of its lower strand in an S-shaped manner around three drive rollers (13, 14, 15), the two outer drive rollers (13 and 15) frictionally or positively pressing the carrying belt (4) laterally against the contra-directionally movable central drive roller (14).

7. Piece goods conveyor installation according to Claim 6, **characterized in that** the central drive roller (14) of the carrying belt (4) is gear-connected to at least one of the deflecting wheels of the flat belt (12) of the drive element (16) for the transmission of the drive force.

8. Piece goods conveyor installation according to Claims 6 and 7, **characterized in that** the drive force for the carrying belt (4) can be transmitted via at least one transmission belt (17) which is endlessly guided, if appropriate looping around a deflecting wheel (18), via a belt pulley (20) connected coaxially to the deflecting wheel of the drive element (16) and via a belt pulley (19) arranged coaxially on the central drive roller (14).

9. Piece goods conveyor installation according to Claim 8, **characterized in that** the transmission belt (17) between the belt pulley (20) of the drive element (16) and the belt pulley (19) of the drive roller (14), the axes of which are arranged at right angles to one another, is rotated on itself through 90°.

10. Piece goods conveyor installation according to Claims 1 to 9, **characterized in that** the carrying belt (4) sags downward, trough-shaped (21), between the deflecting rollers (5).

## Revendications

1. Installation de transport de colis ayant des récipients ( 1 ) individuels de transport de colis ( S ), notamment de bagages, sur une voie convoyeuse ayant des éléments ( 2 ) de support et de guidage des récipients ( 1 ) et au moins un point de déchargement pour décharger le colis ( S ) des récipients ( 1 ) et/ou au moins un point de chargement pour charger chaque récipient ( 1 ) du colis ( S ), dont la surface de support est formée par une bande (4) de support sans fin, apte à porter, sous-tendant chaque récipient ( 1 ) et pouvant être entraînée transversalement au sens de transport du récipient ( 1 ) autour de galets ( 5 ) de renvoi montés des deux côtés du récipient ( 1 ), dans lequel, pour l'entraînement de la bande ( 4 ) de support, il est prévu, dans la région du point de chargement et/ou de déchargement, un entraînement ( 6 ) fixe, qui peut être accouplé, au moins pendant l'opération de chargement et/ou de déchargement, à au moins un élément ( 16 ) d'entraînement, prévu sur le récipient ( 1 ), de la bande ( 4 ) de support,
**caractérisée en ce que**
l'élément ( 16 ) d'entraînement prévu sur le récipient ( 1 ) est constitué sous la forme de courroies ( 12 ) plates, tournant sans fin autour de galets de renvoi parallèlement à la direction de transport, dont au moins une roue de renvoi est en liaison d'action avec la bande ( 4 ) de support et qui peut être mise, dans la région du point de chargement et/ou de déchargement, en coopération de frottement avec une deuxième courroie ( 11 ) plate d'un poste ( 6 ) d'entraînement fixe pouvant être entraînée en tournant sans fin parallèlement à la première courroie ( 12 ) plate et dont la vitesse de rotation et le sens de rotation peuvent être commandés.

2. Installation de transport de colis suivant la revendication 1,
**caractérisée en ce que**
la courroie ( 12 ) plate de l'élément ( 16 ) d'entraînement prévu sur le récipient ( 1 ) et la courroie ( 11 ) plate du poste ( 6 ) d'entraînement fixe tournent autour d'axes horizontaux parallèles entre eux et le plan de la coopération à frottement s'étend sensiblement horizontalement.

3. Installation de transport de colis suivant la revendication 1 et 2,
**caractérisée en ce que**
la courroie ( 11 ) plate du poste ( 6 ) d'entraînement fixe et la courroie ( 12 ) plate de l'élément ( 16 ) d'entraînement peuvent être pressées l'une contre l'autre au moins pendant l'opération de chargement et de déchargement.

4. Installation de transport de colis suivant l'une des revendications 1 à 3,
**caractérisée en ce que**
la courroie ( 11 ) plate du poste ( 6 ) d'entraînement fixe peut, au moins pendant l'opération de chargement et de déchargement, être déplacée au moyen d'un dispositif de levage vers la courroie ( 12 ) plate de l'élément ( 16 ) d'entraînement.

5. Installation de transport de colis suivant la revendication 4,
**caractérisée en ce que**
le dispositif de levage de la courroie ( 11 ) plate du poste ( 6 ) d'entraînement fixe est constitué sous la forme d'un aimant de levage.

6. Installation de transport de colis suivant l'une des revendications 1 à 5,
**caractérisée en ce que**
la bande ( 4 ) de support sous-tendant le récipient ( 1 ) est guidée dans la région de son brin inférieur en forme de ( S ) autour de trois galets ( 13, 14, 15 ) d'entraînement, les deux galets ( 13 et 15 ) d'entraînement extérieurs pressant la bande ( 4 ) de support à complémentarité de frottement ou de forme latéralement contre le galet ( 14 ) d'entraînement central déplaçable en sens contraire.

7. Installation de transport de colis suivant la revendication 6,
**caractérisée en ce que**
le galet ( 14 ) d'entraînement central de la bande ( 4 ) de support est relié cinématiquement à au moins l'une des roues de renvoi de la courroie ( 12 ) plate de l'élément ( 6 ) d'entraînement pour la transmission de la force d'entraînement.

8. Installation de transport de colis suivant la revendication 6 et 7,
**caractérisée en ce que** la force d'entraînement pour la bande ( 4 ) de support peut être transmise par au moins une courroie ( 17 ) de transmission, qui est guidée sans fin sur une poulie ( 20 ) reliée coaxialement à la roue de renvoi de l'élément ( 16 ) d'entraînement et sur une poulie ( 19 ) montée coaxialement au galet ( 14 ) d'entraînement central, le cas échéant en passant autour d'une roue ( 18 ) de renvoi.

9. Installation de transport de colis suivant la revendication 8,
**caractérisée en ce que**
la courroie ( 17 ) de transmission est tournée de 90° entre la poulie ( 20 ) de l'élément ( 16 ) d'entraînement et la poulie ( 19 ) du galet ( 14 ) d'entraînement, dont les axes sont disposés à angle droit l'un par rapport à l'autre.

10. Installation de transport de colis suivant la revendication 1 à 9,
**caractérisée en ce que**
la bande ( 4 ) de support pend vers le bas en forme ( 21 ) de cuvette entre les galets ( 5 ) de renvoi.
